# EUROPEAN PATENT SPECIFICATION

(11) **EP 1 039 616 B1**
(45) Date of publication and mention of the grant of the patent: **02.01.2004**
(21) Application number: 00102864.6
(22) Date of filing: 11.02.2000
(51) Int. Cl.: H02K 3/12

(54) **Motor stator structure**
Statoraufbau eines Motors
Structure du stator d'un moteur

(30) Priority: 19.03.1999 JP 7558399
(43) Date of publication of application: 27.09.2000
(73) Proprietor: Honda Giken Kogyo Kabushiki Kaisha, Minato-ku, Tokyo (JP)
(72) Inventor: Matsuzaki, Akio, c/o KK Honda Gijutsu Kenkyusho, Wako-shi, Saitama-ken (JP)
(74) Representative: Liska, Horst, Dr.

(56) References cited:
- EP-A- 0 899 850
- US-A- 1 512 693
- US-A- 1 784 815
- US-A- 4 115 915
- US-A- 4 321 497
- PATENT ABSTRACTS OF JAPAN vol. 1997, no. 12, 25 December 1997 (1997-12-25) & JP 09 215238 A (HITACHI LTD), 15 August 1997 (1997-08-15)

## Description

The present invention relates to a structure for an outer stator of an inner rotor-type motor in accordance with the preamble of claim 1, as disclosed in US 4 321 497.

US 1 512 693 discloses arc-shaped joint plates on side faces of a stator core. The ends of the joint plates are integrally extended into conductor bars located within the stator slots.

A plurality of slots are formed in a circumferential direction so as to point along the axial direction at the inner surface of a stator core formed in the shape of a cylinder for this type of motor, with a plurality of stator windings being inserted into one slot.

Inserting of the plurality of stator windings in line with the cross-sectional shape of the slots is not straightforward and gaps occur between the windings and the inner surfaces of the slots because windings with circular cross-sections are inserted, which it would be preferable to avoid.

This puts limits on the space factor of a conductor within a slot, ohmic loss due to the splitting up of the volume of the slots is substantial and cooling is poor. Therefore, a plurality of slots pointing in an axial direction are formed at an inner peripheral surface of a cylindrical stator core, wherein conductors of substantially the same cross-sectional shape as the slots are inserted into the slots.

A small-type motor where the capacity of the slots is effectively utilized, the space factor of the conductors is raised up to close to 100 %, ohmic loss is reduced and cooling is superior can therefore be provided because the cross-sectional shape of the slots and the conductors is substantially equal (including the case where the cross-sectional shapes are the same).

Because one conductor is inserted into one slot, there are no gaps etc. between windings that accompany the insertion of a plurality of windings, the capacity of the slots is effectively utilized and the space factor of the conductor is increased.

As the slots of the stator core are rectangular and extend long in a radial direction, a large number of slots can therefore be formed at the inner surface of the stator core, the number of conductors can be increased and motor performance can therefore be improved.

The conductors are straight bus bars, and joint plates that are arc-shaped when viewed from the side are arranged along the side surfaces of the stator core, with ends of the joint plates being coupled in such a manner as to become riveted to the ends of predetermined pairs of bus bars so as to form a circuit. The bus bars are staight, which makes assembly into the slots of the stator core straightforward.

It is not necessary to bend the ends of the bus bar for coupling because joint plates for coupling prescribed pairs of bus bars are used for this purpose and there is therefore no inconvenience even when the cross-sectional area of the bus bars is made sufficiently large. Accordingly, a substantial space factor can be maintained for conductors within the slots of the stator core.

The joint plates are arc-shaped when viewed from the side and are therefore arranged on substantially concentric circles at the annular-shaped side surface of the stator core so as to be flat, and the stator is therefore compact.

The joint plate and bus bars are coupled in a riveted manner, which makes assembly straightforward and conductivity high.

It is an object of the invention to reduce the number of parts and to achieve a compact design of the motor stator structure.

This object is achieved by a motor stator structure in accordance with claim 1.

The long and short first and second joint plates where the ends of the arc-shaped joint plates are bent radially inwards in a deformed C-shape and third joint plates with ends bent outwards in the circumferential direction in a deformed C-shape are arranged on the side surfaces of the stator core in prescribed numbers.

The entire stator circuit can be constructed by coupling pairs of conductors using the three types of joint plate of the first, second and third joint plates. There are therefore few parts and assembly is straightforward.

The number of joint plates that are overlaid can be made small and the stator can be made compact because long and short first and second joint plates with ends bent radially inwards in a deformed C-shape and a third joint plate with ends bent radially outwards in a deformed C-shape can be combined on the same surface.

The following is a description of the embodiments of the present invention shown in Fig. 1 to Fig. 12.
Fig. 1 is a front view of the outer stator of a d.c. brushless motor of an embodiment of the present invention;
Fig. 2 is a cross-section taken along line II-O-II of Fig. 1;
Fig. 3 is an expanded view of the same outer stator;
Fig. 4 is a perspective view of a stator core;
Fig. 5 is a side view of a bus bar;
FIG. 6 is a front view of the same;
FIG. 7 is a side view of the first joint plate;
FIG. 8 is a side view of the second joint plate;
FIG. 9 is a side view of the third joint plate;
FIG. 10 is a cross-sectional view taken along line X-X of FIG. 9;
FIG. 11 is a partial perspective view showing a situation when assembling bus bars and joint plates at the stator core;
FIG. 12 is a perspective view showing part of a coupling structure for an armature circuit;
FIG. 13 is a partial cross-section of a stator of a further embodiment; and
FIG. 14 is a partial cross-section of a stator of a still further embodiment.

The motor of this embodiment is a d.c. brushless motor where an outer motor 1 comprised of a three-phase armature circuit is assembled at the outer periphery of an inner rotor that forms a field using a permanent magnet.

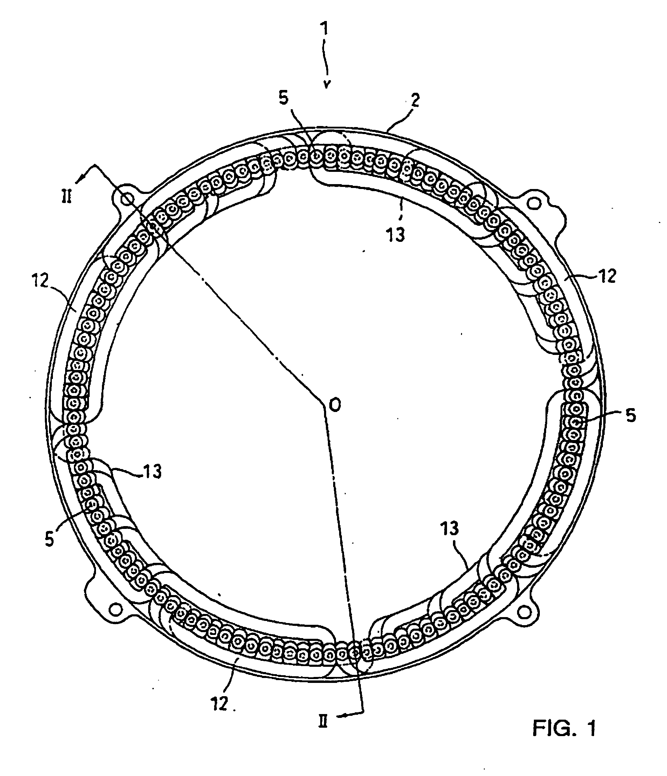

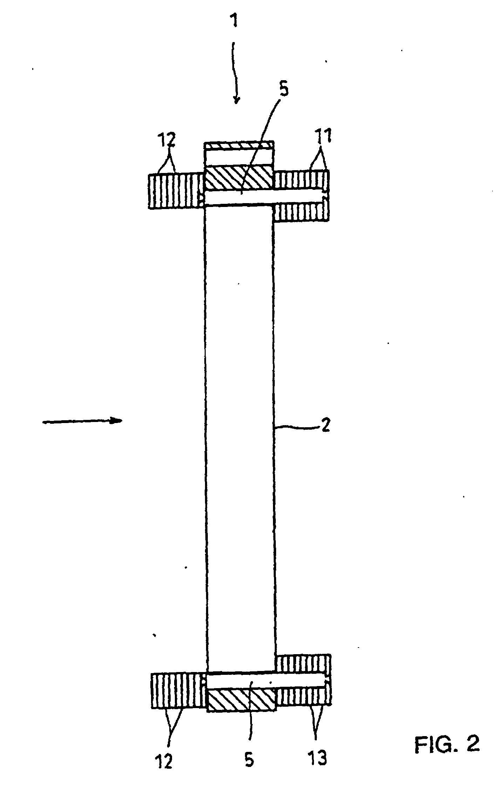

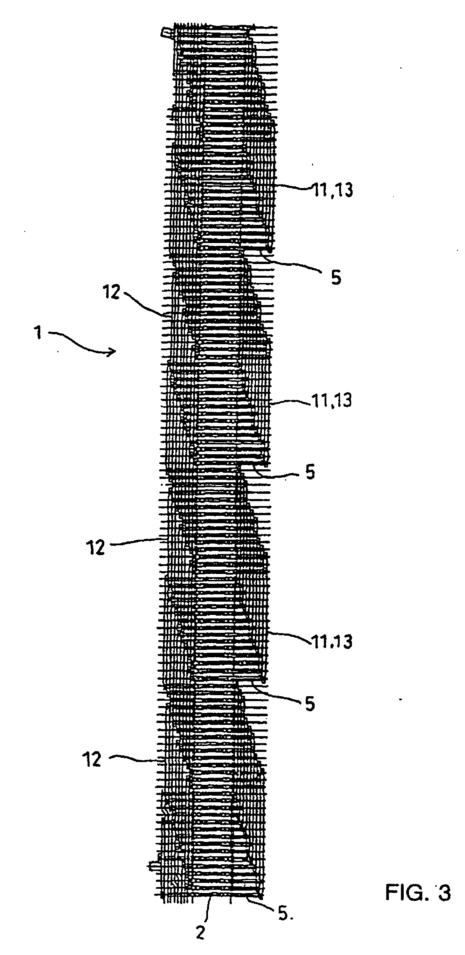

FIG. 1 is a front view with the parts of the outer stator 1 omitted, a cross-sectional view is shown in FIG. 2, and an expanded view is shown in FIG. 3.

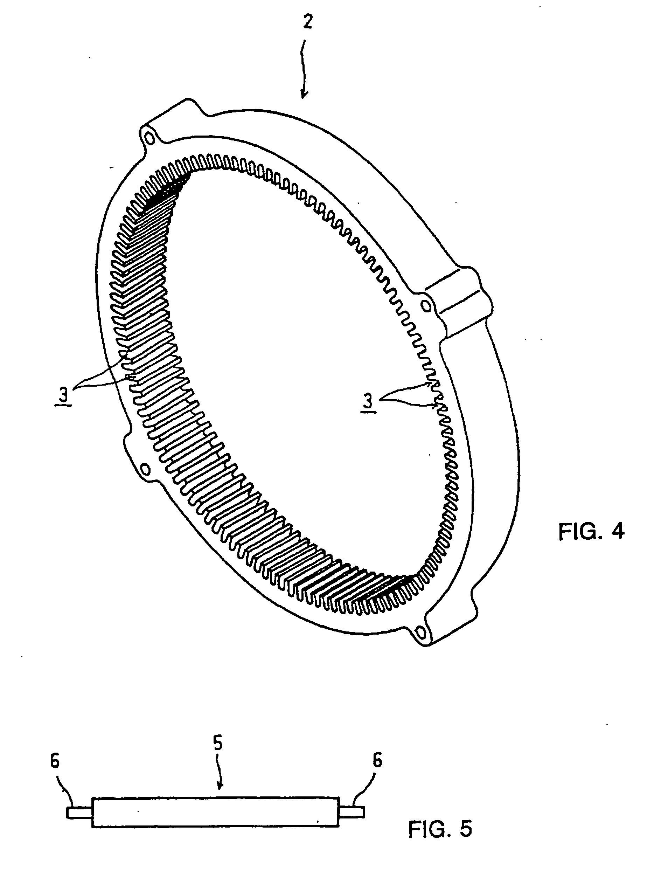

A stator core 2 of an outer stator 1 forms a flat cylinder, as shown in FIG. 4, with a plurality of slots 3 formed in a circumferential direction being formed at the inner surface of the stator core 2 so as to point in an axial direction.

The cross-sectional shape of one slot 3 is substantially rectangular (with rounded corners) and long in a radial direction.

The slot 3 is long in the direction of the diameter and is narrow widthwise in the circumferential direction while maintaining a prescribed cross-sectional surface area. A large number of slots 3 of a prescribed cross-sectional surface area can therefore be formed within a fixed length of the inner periphery of the stator core 2.

Bus bars 5 constituted by straight conductors are then inserted one at a time into each slot 3 of this fixed stator 2.

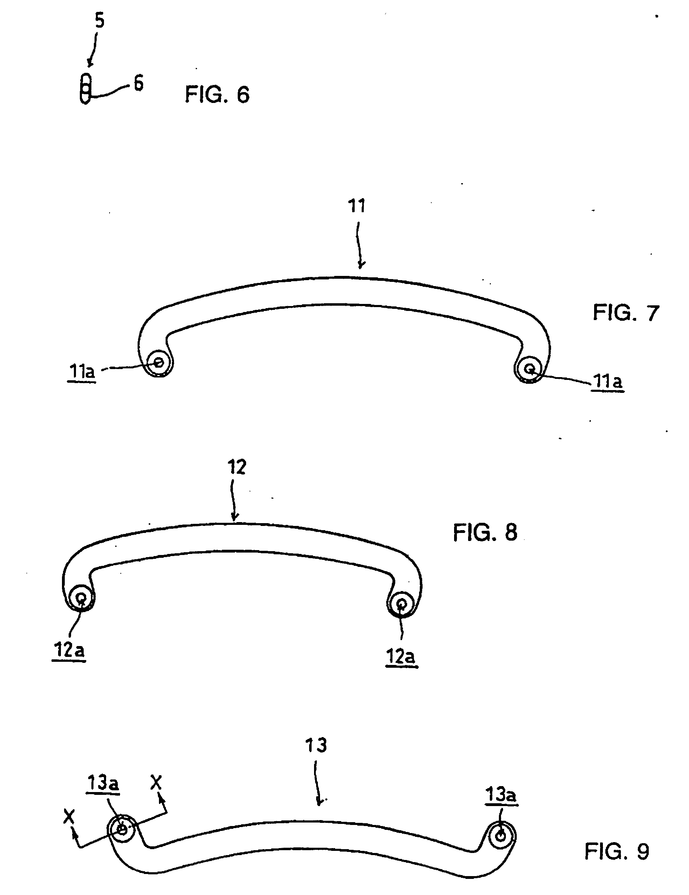

Referring to FIG. 5 and FIG. 6, the cross-sections of the bus bars 5 to be inserted into the slots 3 are substantially the same rectangular shape (specifically, elliptical in shape) as the cross-sections of the slots 3, have a prescribed length longer than the width of the stator core 2 in the axial direction, and have columnar projections 6 projecting from the center of both end surfaces thereof.

The bus bars 5 are made of aluminum.

Joint plates linking the projections 6 of the bus bars 5 couple fellow bus bars together.

Three types of joint plates are used. A first joint plate 11 shown in FIG. 7 is an aluminum plate that isarc-shaped when viewedfrom the side with both ends bent inwards in the circumferential direction so as to form a C-shape.

Circular holes 11a and 11a are formed at the bent end parts at both ends.

A second joint plate 12 is a short aluminum plate (refer to FIG. 8) slightly shorter than the arc portion of the first joint plate 11, with identical circular holes 12a and 12a provided at the bent ends 12a and 12a.

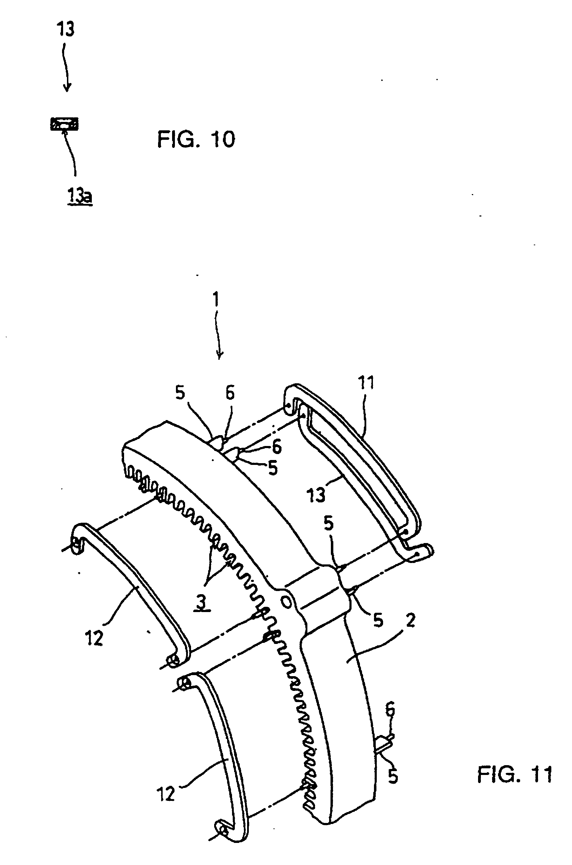

A third joint plate 12 is an aluminum plate which is generally arc shaped when viewed from the side as shown in FIG. 9 with both ends being bent inwards in a circumferential direction so as to form a C-shape, with holes 13a and 13a provided at both bent ends.

The distances between circular holes 13a and 13a of the third joint plate 13 and between the circular holes 12a and 12a of the first joint plate 11 are equal.

Looking at the cross-section of the circular hole 13a, the circular hole 13a has a tapered section where the diameter of the hole is made broader towards one surface of the circular hole 13a.

The circular holes 11a and 12a of the first and second joint plates 11 and 12 also have these tapered sections.

The outer stator 1 is assembled from the stator core 2, the plurality of bus bars 5 and the first, second and third joint plates 11, 12 and 13.

A partially assembled state is shown in FIG. 11. Bus bars 5 are inserted into the slots 3 of the stator core 2 and projections 6 and 6 of two prescribed bus bars 5 and 5 pass through the circular holes 12a and 12a of a second joint plate 12 arranged along one side of the stator core 2 (the side on this side of the axial direction in FIG. 11). The ends of the projections 6 and 6 are then crushed so as to provide a calked coupling. The first joint plate 12 and the third joint plate 13 provided along the other side of the stator core 2 are also coupled in a riveted manner to projections 6 and 6 of two prescribed bus bars 5 and 5 in the same manner.

The first, second and third joint plates 11, 12 and 13 are arranged so that the tapered sections of the circular holes 11a, 12a and 13a are on the opposite side (outer side) to the stator core 2. The tips of the projections 6 of the bus bars 5 that pass through the circular holes 11a, 12a and 13a are then crushed using a press so as to spread out into the tapered sections and provide calked coupling (refer to FIG. 2).

The work involved in this coupling is therefore straightforward and the surface of the joint plate can be kept flat because the riveted portions of the projections 6 spread out into the tapered sections and therefore do not project from the surfaces of the joint plates.

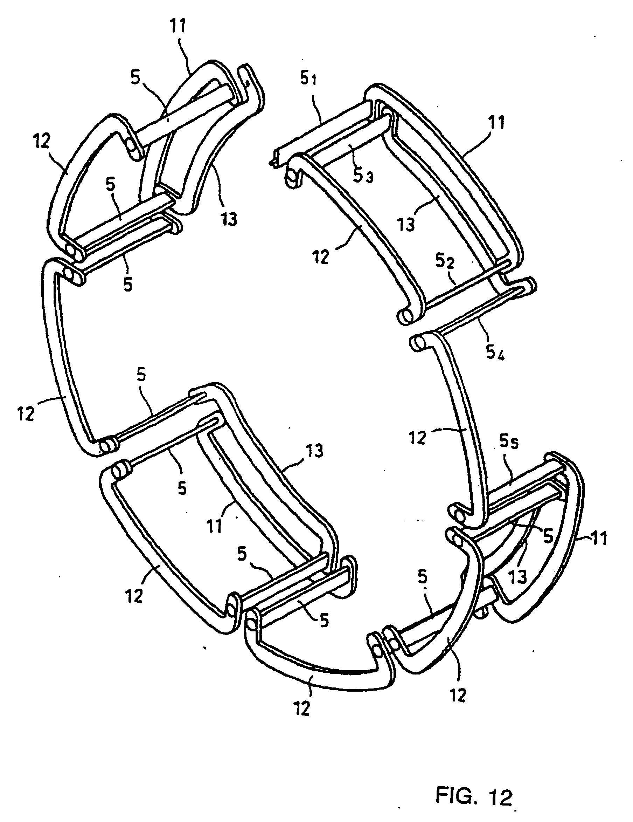

FIG. 12 shows a continuous coupling structure for a single phase armature circuit with the stator core 2 omitted.

Taking this side in the axial direction in FIG. 12 as the front side (the front surface of the fixed stator 2) and the back side as the rear side (the rear surface of the stator core 2), a bus bar 5₁ and a bus bar 5₂ fifteen slots around to the right from the bus bar 5₁ are connected by the first joint plate 11 on the rear side. The bus bar 5₂ and a bus bar 5₃ thirteen slots back around to the left are coupled by the second joint plate 12 at the front side. The bus bar 5₃ and a bus bar 5₄ fifteen slots around to the right are coupled by a third joint plate 13 to the rear side. The bus bar 5₄ and a bus bar 5₅ thirteen slots around to the right are coupled at the front side by a second joint plate 12. The above coupling cycle is then repeated for three and a half cycles until just before a complete cycle is made.

Neighboring bus bars 5₁ and 5₂, and 5₂ and 5₄ etc. are structured so that current flows in the same direction in neighboring bus bars.

This continuous bus bar continuously coupled structure and another type of bus bar continuously coupled structure are shifted with respect to each other in a slotwise direction so as to constitute a single-phase armature circuit, with a further two phases also being provided shifted in a slotwise direction to altogether give a three-phase armature circuit.

As shown in FIG. 2 and FIG. 3, the second joint plate 12 is overlaid at the front surface of the stator core 2 with insulating paper sandwiched therebetween, and the first joint plate 11 and third joint plate 13 are provided at the rear surface of the stator core 2 with insulating paper sandwiched therebetween.

The rivet coupling circular holes 13a and 13a of the third joint plate 13 arranged at the rear surface of the stator core 2 are, at bent end sections, bent outwards away from the center of the stator core 2 and the main body therefore projects slightly inwards towards the center of the stator core 2 (refer to FIG. 1 and FIG. 2).

The inner rotor can therefore be inserted from the front surface of the stator core 2 without being hindered by the third joint plate 13, i.e. it is inserted in the direction of the arrow of FIG. 2.

Regarding the outer stator 1 of this d.c. brushless motor, one bus bar 5 is inserted into one slot 3 of the stator core 2 and the cross-section of the bus bar substantially coincides with the cross-section of the slot 3. The capacity within the slot is therefore utilized in an effective manner and the space factor of the conductor is maximized.

Further, the slots 3 are substantially rectangular so as to be long in the direction of the diameter of the fixed core 2 and a large number of slots 3 can be formed at the inner peripheral surface of the stator core 2, so that a large number of bus bars 5 can be inserted.

The ends of the bus bars 5 engage with the joint plates in a vertical manner and there is therefore no need to bend the bus bars themsel ves. It is therefore easy to maintain the cross-sectional area of the bus bar 5 taken as a conductor and a large space factor can be maintained within the slot 3.

According to the above configuration, current flows effectively in the armature conductor of the bus bar 5, ohmic loss is reduced, superior cooling can be maintained and miniaturization can be achieved.

The bus bars 5 and the first, second and third joint plates 11, 12 and 13 are made of aluminum and are therefore lightweight and cheap.

The number of types of members for coupling the bus bars 5 is low at the three types of the first, second and third joint plates 11, 12 and 13, the bus bars 5 are directly inserted into the slots 3 in a straightforward manner, and the coupling of the first, second and third joint plates 11, 12 and 13 is achieved by riveting, which makes the work involved in assembly easy.

The outer stator is also compact because the plate-shaped first, second and third joint plates 11, 12 and 13 are laid onto the sides of the stator core 2.

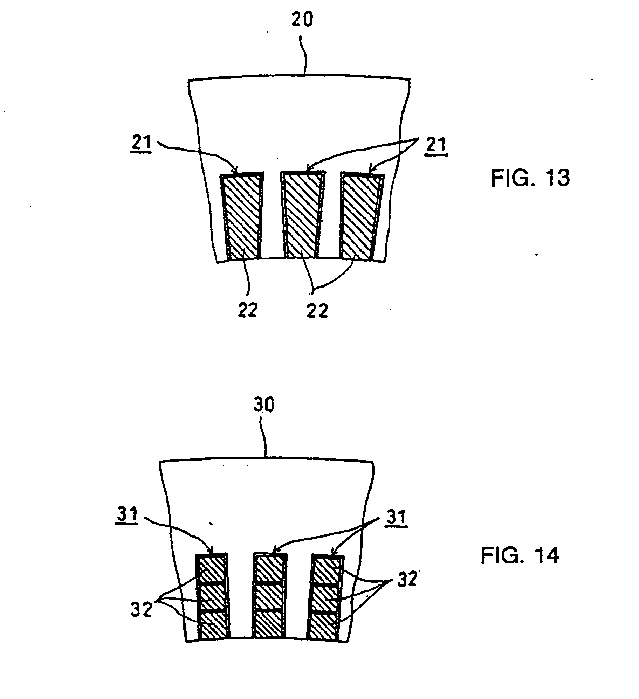

An example of a different shape for the slots in the stator core is shown in FIG. 13.

A slot 21 of a stator core 20 has a cross-section that is trapezoidal in shape and long in the direction of the diameter of the stator core 20, with an outer short side being larger than an inner short side of the trapezoid.

An aluminum bus bar 22 of a trapezoidal cross-sectional shape that is the same as the trapezoidal cross-sectional shape of the slot 21 is then inserted into the slot 21.

Prescribed pairs of bus bars 22 and 22 are then coupled in the same manner using the joint plates.

A small-type motor where the cross-sectional area of the bus bar 22 taken as a conductor can easily be maintained, a large space factor can be maintained within the slot 21, ohmic loss can be reduced and cooling is superior can therefore be provided.

A description is now given based on FIG. 14 of a further embodiment.

A stator core 30 has slots 31 rectangular in cross-section and being long in the direction of the diameter of the stator core 30, with three bus bars 32, each being rectangular in cross-section, being inserted into each of the slots 31.

The three bus bars 32 are aluminum and together have a cross-section substantially equal to the cross-section of the rectangular shape of the slot 31, the slot 31 is substantially filled up and the space factor is therefore high.

Examples of various modifications to the cross-sectional shape ofthe slots can be considered.

Further, the insertion of two or four or more conductors into a slot can also be considered.

In the above, the outer stator is applied to a d.c. brushless motor, but can also be applied to use in a synchronous motor and other types of motor.
The invention provides a small-type motor where the assembly of conductors into slots is straightforward, the space factor for the conductors within the slot is high, ohmic loss is reduced and cooling is superior.

To achieve this, a motor stator structure where a plurality of slots 3 are formed pointing in an axial direction at the inner peripheral surface of a cylindrical stator core 2 and conductors 5 of substantially the same cross-sectional shape as the slots 3 are inserted into the slots 3.

## Claims

1. A motor stator structure with a plurality of slots (3) pointing in an axial direction formed at an inner peripheral surface of a cylindrical stator core (2), wherein conductors (5) of the same cross-sectional shape as the slots (3) are inserted into the slots (3),
wherein one conductor (5) is inserted into each slot,
wherein the slots (3) of the stator core (2) are rectangular and extend in a radial direction,
wherein the conductors are straight bus bars (5; 22; 32), and
joint plates (11, 12, 13) that are arc-shaped when viewed from the side are arranged along the side surfaces of the stator core (2, 20), with ends of the joint plates being coupled in such a manner as to become riveted to the ends of predetermined pairs of bus bars (5; 22; 32) so as to form a circuit,
**characterized by** first joint plates (11) and second joint plates (12) which are shorter than the first joint plates (11) in the circumferential direction of the stator core (2), wherein the ends of the first and second joint plates (11, 12) are bent radially inwards in a deformed C-shape; and third joint plates (13) with ends bent outwards in a deformed C-shape, wherein the joint plates (11, 12, 13) are arranged in the circumferential direction on the side surfaces of the stator core (2) in prescribed numbers.

## Patentansprüche

1. Motorstatorstruktur mit einer Mehrzahl von in einer Achsrichtung weisenden Schlitzen (3), die an einer Innenumfangsfläche eines zylindrischen Statorkerns (2) ausgebildet sind, worin Leiter (5) der gleichen Querschnittsform wie die Schlitze (3) in die Schlitze (3) eingesetzt sind,
worin ein Leiter (5) in jeden Schlitz eingesetzt ist,
worin die Schlitze (3) des Statorkerns (2) rechteckig sind und sich in einer radialen Richtung erstrecken,
worin die Leiter gerade Busstangen (5; 22; 32) sind, und
Verbindungsplatten (11, 12, 13), die von der Seite her betrachtet bogenförmig sind, entlang den Seitenflächen des Statorkerns (2, 20) angeordnet sind, wobei Enden der Verbindungsplatten derart miteinander gekoppelt sind, dass sie mit den Enden vorbestimmter Paare der Busstangen (5; 22; 32) vernietet werden, um einen Stromkreis zu bilden,
**gekennzeichnet durch** erste Verbindungsplatten (11) und zweite Verbindungsplatten (12), die in der Umfangsrichtung des Statorkerns (2) kürzer sind als die ersten Verbindungsplatten (11), worin die Enden der ersten und zweiten Verbindungsplatten (11, 12) in einer deformierten C-Form radial einwärts gebogen sind; und dritte Verbindungsplatten (13), deren Enden in einer deformierten C-Form auswärts gebogen sind, worin die Verbindungsplatten (11, 12, 13) in der Umfangsrichtung an den Seitenflächen des Statorkerns (2) in vorbestimmten Anzahlen angeordnet sind.

## Revendications

1. Structure de stator pour moteur comprenant une pluralité d'encoches (3), en saillie dans une direction axiale, formées sur une surface périphérique interne d'un noyau de stator cylindrique (2), dans laquelle des conducteurs (5) ayant la même forme en coupe transversale que les encoches (3) sont introduits à l'intérieur des encoches (3),
dans laquelle un conducteur (5) est introduit dans chaque encoche,
dans laquelle les encoches (3) du noyau de stator (2) sont rectangulaires et s'étendent dans une direction radiale,
,dans laquelle les conducteurs sont des barres bus rectilignes (5 ; 22 ; 32), et
des plaques de connexion (11, 12, 13), qui ont une forme en arc de cercle lorsqu'elles sont vues latéralement, sont aménagées le long des surfaces latérales du noyau de stator (2, 20), les extrémités des plaques de connexion étant accouplées de telle sorte qu'elles sont rivetées sur les extrémités de paires de barres bus prédéterminées (5 ; 22 ; 32) de manière à former un circuit,
**caractérisée par** des premières plaques de connexion (11) et des secondes plaques de connexion (12), qui sont plus courtes que les premières plaques de connexion (11) dans la direction de la circonférence du noyau de stator (2), dans laquelle les extrémités des premières et secondes plaques de connexion (11, 12) sont recourbées vers l'intérieur dans le sens radial dans une forme de C déformé ; et par des troisièmes plaques de connexion (13) dont les extrémités sont recourbées vers l'extérieur dans une forme de C déformé, dans laquelle les plaques de connexion (11, 12, 13) sont disposées dans la direction de la circonférence sur les surfaces latérales du noyau de stator (2) selon des nombres prescrits.
